# EUROPÄISCHE PATENTSCHRIFT

(11) **EP 3 760 407 B1**
(45) Veröffentlichungstag und Bekanntmachung des Hinweises auf die Patenterteilung: **03.05.2023**
(21) Anmeldenummer: 19184019.8
(22) Anmeldetag: 02.07.2019
(51) Int. Cl.: B29C 33/40, B29C 45/26, B29C 45/40

(54) **SPRITZGUSSWERKZEUG ZUM HERSTELLEN VON SPRITZGUSSTEILEN**
INJECTION-MOULDING TOOL FOR PRODUCING INJECTION-MOULDED PARTS
OUTIL DE MOULAGE PAR INJECTION DESTINÉ À LA FABRICATION DE PIÈCES MOULÉES PAR INJECTION

(43) Veröffentlichungstag der Anmeldung: 06.01.2021
(73) Patentinhaber: Motherson Innovations Company Limited, London EC2N 2AX (GB)
(72) Erfinder: Dormanns, Jan, 79183 Waldkirch (DE); Rinderlin, Jürgen, 79279 Vörstetten (DE); Haiberger, Manfred, 4533 Piberbach (AT)
(74) Vertreter: Westphal, Mussgnug & Partner Patentanwälte mbB

(56) Entgegenhaltungen:
- JP-A- H0 655 544
- JP-A- S5 062 253
- JP-A- S6 063 113
- JP-A- H01 157 825
- JP-A- S59 198 128
- JP-U- S63 184 709
- Anonymous: "PolyJet For Injection Molding", , 24. Februar 2016 (2016-02-24), Seiten 1-19, XP055659218, Gefunden im Internet: URL:https://www.alphacam.ch/fileadmin/user _upload/Applikationen/PDFs/Technical_Appli cation_Guide_-_Injection_Molding_-_PolyJet _For_Injection_Molding_-_English_A4_Web.pd f [gefunden am 2020-01-17]

## Beschreibung

Die vorliegende Erfindung betrifft ein Spritzgusswerkzeug zum Herstellen von Spritzgussteilen.

Bei der Herstellung von Spritzgussteilen werden üblicherweise Thermoplast-Kunststoffe verwendet, die bei hoher Temperatur und mit hohem Druck in die Spritzgusswerkzeuge eingespritzt werden. Folglich müssen die Spritzgusswerkzeuge so ausgelegt sein, dass sie diesen Temperaturen und diesen Drücken auch nach intensiver Nutzung und langen Betriebszeiten standhalten können. Die Verwendung von Stahl als Werkstoff für die Spritzgusswerkzeuge hat sich daher als besonders vorteilhaft erwiesen. Zudem weist Stahl den Vorteil auf, dass sich seine Wärmeausdehnung in Folge einer Temperaturerhöhung in Grenzen hält, so dass die im Spritzguss hergestellten Spritzgussteile mit einer ausreichenden Maßgenauigkeit hergestellt werden können.

Derartige Spritzgusswerkzeuge sind aus der JP H06 55544 bekannt. Die JP H06 55544 offenbart ein Spritzgusswerkzeug nach dem Oberbegriff des Anspruchs 1.

Die Herstellung von Spritzgusswerkzeugen und insbesondere der Formeinsätze, welche die Kavität für die Spritzgussteile bilden, unter Verwendung von Stahl ist jedoch ein vergleichsweise komplizierter Vorgang, welcher lange Fertigungszeiten und hohe Kosten mit sich bringt. Zudem sind lange Lieferzeiten an der Tagesordnung, so dass sich Änderungen an der Form der Spritzgussteile nur mit sehr hohem Aufwand realisieren lassen.

In letzter Zeit sind im Bereich der additiven Fertigung Kunststoffe entwickelt worden, welche den beim Spritzgießen vorliegenden hohen Drücken und den hohen Temperaturen in ausreichendem Umfang standhalten können. Zudem eröffnet die additive Fertigung, auch als 3D-Druck bezeichnet, die Möglichkeit, Formeinsätze aus Kunststoff innerhalb von vergleichsweise kurzer Zeit zu vergleichsweise günstigen Kosten herzustellen. Spritzgusswerkzeuge, welche Formeinsätze aus Kunststoff aufweisen, sind beispielsweise in folgendem Dokument beschrieben: PolyJet For Injection Molding, Technical Application Guide, Stratasys Ltd., Gefunden im Internet unter <https://www.alphacam.ch/ fileadmin/user_upload/Applikationen/PDFs/Technical_Application_Guide_-_Injection_Molding_-_PolyJet_For_Injection_Molding_-_English_A4_Web.pdf> [gefunden am 2020-01-17], Nichtpatentliteratur Veröffentlichungsnummer XP055659218. Darin wird ein Formeinsatz aus Kunststoff offenbart, der mit einer Zwischenplatte in die Vertiefung einer Metall-Stammform eingesetzt ist, wobei in dieser auch ein modulares Auswerfersystem untergebracht ist.

Allerdings weisen auch diese Kunststoffe eine im Vergleich zu Stahl erhöhte Wärmeausdehnung auf.

Um die Spritzgussteile aus dem Formeinsatz zu entfernen, werden sogenannte Auswerfer verwendet. Auswerfer umfassen eine Anzahl von im Wesentlichen stangenförmigen Elementen, welche mit einer geeigneten Antriebseinrichtung entlang einer Richtung vor und zurückgeschoben werden können, wozu sie entsprechend im Spritzgusswerkzeug gelagert sind. Die Auswerfer sind derart im Spritzgusswerkzeug angeordnet, dass sie bis in die Formeinsätze vorgeschoben werden können, wodurch das fertiggestellte Spritzgussteil aus dem Formeinsatz herausgeschoben werden kann.

Die Verwendung von Kunststoff eignet sich insbesondere zum Herstellen der Formeinsätze, wohingegen die übrigen Komponenten des Spritzgusswerkzeugs weiterhin aus Stahl gefertigt werden. Infolgedessen ergeben sich innerhalb des Spritzgusswerkzeugs infolge der Temperaturänderungen unterschiedliche Wärmeausdehnungen. Wie erwähnt, sind die Auswerfer im überwiegend aus Stahl gefertigten Spritzgusswerkzeug gelagert, müssen aber, um das Spritzgussteil aus dem Formeinsatz entfernen zu können, diesen zumindest teilweise durchdringen. Aufgrund der unterschiedlichen Wärmeausdehnungen können die Auswerfer innerhalb des Spritzgusswerkzeugs verklemmen, wodurch diese nur mit hohem Kraftaufwand bewegt werden können. Hierdurch werden die Auswerfer stark belastet, so dass sie einem erhöhten Verschleiß unterliegen und sogar brechen können. Auch die Formeinsätze sind einem erhöhten Verschleiß ausgesetzt, wodurch die Maßgenauigkeit herabgesetzt werden kann.

Wie erwähnt, ermöglicht der Einsatz von Kunststoff die kostengünstige und schnelle Herstellung von Formeinsätzen, so dass ein vorhandenes Spritzgusswerkzeug auf relativ einfache Weise umgebaut werden kann, um zur Herstellung von unterschiedlich geformten Spritzgussteilen verwendet werden zu können. Allerdings müssen die Formeinsätze in einer eindeutigen Position zum übrigen Spritzgusswerkzeug an diesem befestigt werden, um eine störungsfreie Produktion der Spritzgussteile gewährleisten zu können. Die bislang verwendeten Formeinsätze erfordern es, dass diese passende Schnittstellen zum übrigen Spritzgusswerkzeug aufweisen. Hierdurch wird die Flexibilität eines gegebenen Spritzgusswerkzeugs eingeschränkt.

Aufgabe einer Ausführungsform der vorliegenden Erfindung ist es, ein Spritzgusswerkzeug vorzuschlagen, mit welchem es mit einfachen und kostengünstigen Mitteln möglich ist, die auf die Auswerfer wirkenden Belastungen zu reduzieren, wenn sie für Spritzgusswerkzeuge eingesetzt werden, die Formeinsätze aus Kunststoff aufweisen. Des Weiteren liegt einer Ausgestaltung der vorliegenden Erfindung die Aufgabe zugrunde, ein Spritzgusswerkzeug zu schaffen, welches flexibel zur Herstellung von unterschiedlich geformten Spritzgussteilen verwendet werden kann.

Diese Aufgabe wird mit den in den in Anspruch 1 angegebenen Merkmalen gelöst. Vorteilhafte Ausführungsformen sind Gegenstand der Unteransprüche.

Wie erwähnt, werden die Auswerfer entlang einer ersten Richtung vor- und zurück bewegt. Damit die Auswerfer in den Formeinsatz eingebracht werden können, weist der Formeinsatz eine Durchgangsbohrung auf, in welche der Auswerfer mehr oder weniger weit hineinragt. Zumindest beim Auswerfen der fertig gestellten Spritzgussteile durchläuft der Auswerfer die Durchgangsbohrung vollständig. Aufgrund der eingangs erwähnten erhöhten Wärmeausdehnung des aus Kunststoff hergestellten Formeinsatzes wird der Auswerfer im Stand der Technik hauptsächlich in eine zweite Richtung belastet, welche senkrecht zur ersten Richtung verläuft. Infolgedessen wirken vergleichsweise hohe Biegemomente und/oder Scherkräfte auf den Auswerfer, die zur eingangs erwähnten Gefahr des Verklemmens und des erhöhten Verschleißes führen.

Vorschlagsgemäß ist vorgesehen, dass der Auswerfer einen ersten Abschnitt und einen zweiten Abschnitt aufweist, welche sich an einer Trennstelle relativ zueinander entlang der zweiten Richtung bewegen können. Dabei ist die Trennstelle außerhalb des aus Kunststoff bestehenden Formeinsatzes angeordnet, wobei die Trennstelle auch in einer Ausnehmung des Formeinsatzes angeordnet sein kann. Entscheidend ist, dass der Formeinsatz nur auf den zweiten Abschnitt, nicht aber auf den ersten Abschnitt einwirken kann. Die Kräfte, die aufgrund der Wärmeausdehnung des aus Kunststoff bestehenden Formeinsatzes wirken, wirken nur auf den zweiten Abschnitt des vorschlagsgemäßen Auswerfers. Die auf den Auswerfer wirkenden Biegemomente werden daher deutlich reduziert, so dass die Gefahr des Veklemmens und des erhöhten Verschleißes im Vergleich zu aus dem Stand der Technik bekannten Auswerfern deutlich reduziert wird. Folglich lässt sich auch der Kraftaufwand, der zum Bewegen des vorschlagsgemäßen Auswerfers benötigt wird, deutlich reduzieren. Die hierzu benötigte Energie wird reduziert, so dass sich das vorschlagsgemäße Spritzgusswerkzeug kostengünstiger betreiben lässt.

Erfindungsgemäß weist das Spritzgusswerkzeug ein mit dem zweiten Abschnitt zusammenwirkendes Vorspannmittel auf, welche den zweiten Abschnitt zur Trennstelle hin vorspannt. Die Trennstelle kann beispielsweise nach Art eines Kreuzschlittens ausgeführt sein, so dass sowohl Zug-als auch Druckkräfte zwischen den beiden Abschnitten übertragen werden können. Allerdings ist die hierzu notwendige Mechanik vergleichsweise aufwendig. Die Verwendung eines Vorspannmittels, welches den zweiten Abschnitt zur Trennstelle hin vorspannt, ermöglicht es, die beiden Abschnitte über ebene Flächen aneinanderstoßen zu lassen. Die Übertragbarkeit von Zugkräften kann entfallen, da das Vorspannmittel den zweiten Abschnitt nachführt, sobald der erste Abschnitt vom Formeinsatz weg bewegt wird. Insgesamt lässt sich der konstruktive Aufwand der Gestaltung der Trennstelle in dieser Ausführungsform gering gehalten.

Erfindungsgemäß umfasst das Spritzgusswerkzeug eine zwischen der Grundplatte und dem Formeinsatz angeordnete Adapterplatte aus Stahl mit einer Anzahl von Führungsbohrungen zum Führen des Auswerfers, wobei sich das Vorspannmittel an der Adapterplatte abstützt. Die Verwendung einer Adapterplatte hat einerseits den Vorteil, dass das Spritzgusswerkzeug insgesamt verstärkt wird, und andererseits, dass die Auswerfer zusätzlich geführt werden. Darüber hinaus kann die Adapterplatte dazu genutzt werden, um die Vorspannmittel abzustützen. Folglich sind keine weitergehenden Maßnahmen zum Abstützen der Vorspannmittel notwendig.

Bei einer weitergebildeten Ausführungsform kann die Adapterplatte eine in etwa konzentrisch zur Führungsbohrung angeordnete Ausnehmung mit einem Ausnehmungsgrund aufweisen und sich das Vorspannmittel am Ausnehmungsgrund abstützen. Die Ausnehmung, in welches das Vorspannmittel hineinragt, wirkt führend auf das Vorspannmittel, so dass Belastungen vermieden werden, welche das Vorspannmittel beschädigen könnten.

Bei einer weiteren Ausführungsform kann zwischen dem Ausnehmungsgrund und dem Vorspannmittel ein Gleitkörper angeordnet sein. Wie erwähnt, kann sich der zweite Abschnitt des Auswerfers entlang der zweiten Richtung relativ zum ersten Auswerfer bewegen. Je nach Ausgestaltung des Vorspannmittels folgt dieses der Bewegung des zweiten Abschnitts. Der Gleitkörper, der beispielsweise als Unterlegscheibe oder Gleitscheibe ausgebildet sein kann, sorgt dafür, dass die Reibung, welche zwischen dem Ausnehmungsgrund und dem Vorspannmittel beim Bewegen entlang der zweiten Richtung wirkt, gering bleibt. Somit wird ein Verklemmen verhindert. Zudem wird der Verschleiß gering gehalten. Die Bewegung relativ zur Adapterplatte wird hierdurch ermöglicht. Hierzu ist es notwendig, dass der Durchmesser des Durchgangslochs des Gleitkörpers ausreichend groß ist, um die Bewegung nicht zu blockieren.

Eine weitergebildete Ausführungsform zeichnet sich dadurch aus, dass zwischen der Grundplatte und der Adapterplatte eine Auswerferplatte aus Stahl angeordnet ist und die Trennstelle in der Auswerferplatte angeordnet ist. Die Auswerferplatte sorgt ebenfalls für eine Stabilisierung des gesamten Spritzgusswerkzeugs.

Nach Maßgabe einer weiteren Ausführungsform weist die Auswerferplatte eine Vertiefung auf, in welcher die Trennstelle angeordnet ist. Die Anordnung der Trennstelle in einer Vertiefung der Auswerferplatte bewirkt, dass die Trennstelle beispielsweise vor Verunreinigungen geschützt wird.

Eine weitere Ausführungsform zeichnet sich dadurch aus, dass die Vertiefung eine Anlagefläche aufweist und das Vorspannmittel den zweiten Abschnitt gegen die Anlagefläche vorspannt. Die Anlagefläche legt eine erste Endstellung des zweiten Abschnitts fest. Hierdurch lässt sich die Montage des vorschlagsgemäßen Auswerfers vereinfachen. Insbesondere kann der zweite Abschnitt des Auswerfers unabhängig vom ersten Abschnitt montiert werden. Der Austausch eines der Abschnitte lässt sich auf vergleichsweise einfache Weise durchführen.

Ein Spritzgusswerkzeug zum Herstellen von Spritzgussteilen, umfassend
- eine Grundplatte aus Stahl,
- einen auf der Grundplatte gelagerten Formeinsatz aus Kunststoff zum Bereitstellen einer oder mehrerer Kavitäten für das oder die herzustellenden Spritzgussteile, und
- eine Wechseleinrichtung, mit welcher der Formeinsatz lösbar an der Grundplatte befestigbar ist und Ausgleichsmittel aufweist, mit denen Formeinsätze mitunterschiedlichen Größen einsetzbar sind,
ist nicht erfindungsgemäß und die Beschreibung zugehöriger Ausbildungen dient lediglich der Veranschaulichung.

Wie erwähnt, bestehen Spritzgusswerkzeuge überwiegend aus Stahl. Bei der Verwendung von Kunststoff weisen die Formeinsätze eine deutlich abweichende Wärmeausdehnung zum übrigen Spritzgusswerkzeug auf. Um eine Verformung der Formeinsätze im Betrieb des Spritzgusswerkzeugs infolge der unterschiedlichen Wärmeausdehnungen zu vermeiden, weist die Wechseleinrichtung, mit welcher ein Formeinsatz durch einen anderen Formeinsatz auf einfache Weise ausgetauscht werden kann, Ausgleichsmittel auf. Die Ausgleichsmittel sorgen dafür, dass die unterschiedliche Wärmeausdehnung nicht zu einer Verformung des aus Kunststoff hergestellten Formeinsatzes im Betrieb des Spritzgusswerkzeugs führt. Das Ausgleichsmittel kann beispielsweise ein elastisches Element sein, welches zwischen dem Formeinsatz und dem übrigen Spritzgusswerkzeug angeordnet ist und insbesondere die in die zweite Richtung wirkenden unterschiedlichen Wärmeausdehnungen ausgleicht.

Bei einer weiteren Ausbildung, die nicht Teil der Erfindung ist, ist vorgesehen, dass die Ausgleichsmittel Formschlussmittel aufweisen, die zum Befestigen an der Grundplatte mit dem Formeinsatz zusammenwirken. Die Formschlussmittel können derart ausgestaltet sein, dass einerseits die Formeinsätze mit der ausreichenden Genauigkeit am übrigen Spritzgusswerkzeug befestigt sind, andererseits jedoch die unterschiedlichen Wärmeausdehnungen nicht dazu führen, dass sich die Formeinsätze im Betrieb des Spritzgusswerkzeugs verformen.

Eine fortentwickelte Ausbildung, die nicht Teil der Erfindung ist, gibt vor, dass die Ausgleichsmittel eine Anzahl von Klemmleisten aufweisen, mit welchen der Formeinsatz an der Grundplatte befestigbar ist. Die Klemmleisten weisen eine vergleichsweise einfache geometrische Form auf, so dass sie sich kostengünstig herstellen lassen. Darüber hinaus können die Klemmleisten in verschiedenen Größen bereitgestellt werden, so dass unterschiedliche Formeinsätze mit einem gegebenen Spritzgusswerkzeug verbunden werden können. Insbesondere in dieser Ausbildung lässt sich ein gegebenes Spritzgusswerkzeug flexibel einsetzen. Je nachdem, wie stark die Klemmleisten auf den Formeinsatz aufgeschraubt werden, bewirken die Klemmleisten neben dem Formschluss auch einen senkrecht zum Formschluss wirkenden Reibschluss.

Nach Maßgabe einer fortentwickelten Ausbildung, die nicht Teil der Erfindung ist, weist der Formeinsatz eine Anzahl von Ausnehmungen auf, in welche jeweils eine Klemmleiste eingreift. Die Ausnehmungen können so hergestellt werden, dass die unterschiedlichen Wärmeausdehnungen im Betrieb des Spritzgusswerkzeugs besonders gut aufgenommen werden können. Beispielsweise können die Ausnehmungen mit einer reibungsreduzierenden Beschichtung versehen werden, so dass die Belastungen, welche auf den Formeinsatz wirken, gering gehalten wird. Zudem kann der Verschleiß in Grenzen gehalten werden.

Bei einer weiterführenden Ausbildung, die nicht Teil der Erfindung ist, ist vorgesehen, dass die Wechseleinrichtung eine Anzahl von Auflageleisten aufweist, mit denen der Formeinsatz in Bezug auf die Grundplatte positionierbar ist. Wie erwähnt, ist es zum störungsfreien Betrieb des Spritzgusswerkzeugs erforderlich, dass der Formeinsatz möglichst genau in Bezug auf das übrige Spritzgusswerkzeug an diesem befestigt wird. Die Auflageleisten ermöglichen die genaue Positionierung des Formeinsatzes in Bezug auf das übrige Spritzgusswerkzeug, wobei diese auch flexibel an unterschiedlich dimensionierte Formeinsätze angepasst werden können.

Eine fortentwickelte Ausbildung, die nicht Teil der Erfindung ist, gibt vor, dass die Auflageleisten eine freie Oberfläche bilden, welche zumindest teilweise von den Klemmleisten überdeckt wird, wobei die Klemmleisten zum Formeinsatz hin über die Auflageleisten überstehen. In dieser Ausbildung kann die Wechseleinrichtung besonders kompakt ausgeführt werden, wodurch sowohl die genaue Positionierung als auch der Austausch der Formeinsätze sehr einfach durchgeführt werden kann.

Nach Maßgabe einer fortentwickelten Ausbildung, die nicht Teil der Erfindung ist, weist das Spritzgusswerkzeug einen mit der Grundplatte verbindbaren oder verbundenen Formrahmen auf, an dem die Wechseleinrichtung befestigbar oder befestigt ist. Der Formrahmen ist einerseits an die individuelle Form des verwendeten Formeinsatzes und andererseits insbesondere an die Befestigungspunkte des bestehenden Spritzgusswerkzeugs angepasst. Mithilfe des Formrahmens kann die Flexibilität eines vorliegenden Spritzgusswerkzeugs erhöht und gleichzeitig jedoch die sichere und genaue Positionierung des Formeinsatzes in Bezug auf das übrige Spritzgusswerkzeug sichergestellt werden.

Bei einer weiteren Ausbildung, die nicht Teil der Erfindung ist, ist vorgesehen, dass die Klemmleisten und/oder die Auflageleisten Langlöcher aufweisen, durch welche Schrauben zum Verbinden der Klemmleisten und/oder der Auflageleisten mit dem Formrahmen durchführbar sind. Die Langlöcher lassen eine Bewegung der Klemmleisten und/oder der Auflageleisten in Bezug zum übrigen Spritzgusswerkzeug in eine wählbare Richtung zu. Mit der Verwendung der Langlöcher ist es auf besonders einfache Weise möglich, die unterschiedlichen Wärmeausdehnungen, die im Betrieb des Spritzgusswerkzeugs auftreten, auszugleichen und gleichzeitig jedoch die Genauigkeit der Positionierung des Formeinsatzes gegenüber dem übrigen Spritzgusswerkzeug sicherzustellen.

Eine fortentwickelte Ausbildung gibt vor, dass das Spritzgusswerkzeug
- zumindest einen Auswerfer zum Auswerfen des oder der Spritzgussteile aus der Kavität, und
- eine Adapterplatte aus Stahl mit einer Anzahl von Führungsbohrungen zum Führen zumindest eines Auswerfers aufweist, welche in den Formrahmen einlegbar ist.

Die Verwendung einer Adapterplatte hat einerseits den Vorteil, dass das Spritzgusswerkzeug insgesamt verstärkt wird, und andererseits, dass die Auswerfer zusätzlich geführt werden. Dadurch, dass die Adapterplatte in den Formrahmen einlegbar ist, sind keine zusätzlichen Maßnahmen notwendig, um die Adapterplatte gegenüber dem übrigen Spritzgusswerkzeug zu positionieren. Die Anzahl und die Position der Führungsbohrungen können so gewählt werden, dass die Auswerfer für eine große Anzahl von unterschiedlich dimensionierten Formeinsätzen verwendet werden können. So ist es beispielsweise nicht notwendig, dass die Anzahl der Auswerfer gleich der Anzahl der Führungsbohrungen sein muss. Es ist durchaus möglich, einige Führungsbohrungen leer zu lassen, wenn diese dort positioniert sind, wo keine Auswerfer benötigt werden.

Nach Maßgabe einer fortentwickelten Ausbildung zeichnet sich das Spritzgusswerkzeug dadurch aus, dass
- der Auswerfer entlang einer ersten Richtung bewegbar im Spritzgusswerkzeug gelagert ist und zumindest teilweise in die Durchgangsbohrung hineinragt, so dass der Auswerfer in die Kavitäten einbringbar ist,
- der Auswerfer einen ersten Abschnitt und einen zweiten Abschnitt umfasst, die an einer Trennstelle miteinander zusammenwirken und die in der Trennstelle in einer senkrecht zur ersten Richtung verlaufenden zweiten Richtung relativ zueinander bewegbar sind und
- die Trennstelle außerhalb des Formeinsatzes angeordnet ist.

Wie erwähnt, treten im Betrieb des Spritzgusswerkzeugs unterschiedliche Wärmeausdehnungen auf, da die Formeinsätze des vorliegenden Spritzgusswerkzeugs aus Kunststoff hergestellt sind, während die übrigen Komponenten des Spritzgusswerkzeugs aus Stahl bestehen. Aufgrund der vorschlagsgemäßen Ausführung des Auswerfers ist eine Relativbewegung zwischen dem ersten Abschnitt und dem zweiten Abschnitt in der zweiten Richtung möglich, so dass die Belastungen, die auf den Auswerfer wirken, nicht zu einem Verklemmen des Auswerfers führen. Zudem werden der Verschleiß und die Kraft zum Bewegen des Auswerfers gering gehalten.

Bei einer weiterführenden Ausbildung ist vorgesehen, dass die Führungsbohrungen der Adapterplatte einen Bohrungsdurchmesser aufweisen, der größer ist als der Durchmesser desjenigen Abschnitts, der die Adapterplatte durchläuft. In dieser Ausbildung kann sich der Formeinsatz infolge einer Temperaturerhöhung ausdehnen, ohne dass es zu einem Verklemmen desjenigen Abschnitts des Auswerfers, der die Führungsbohrung durchläuft, in der Adapterplatte kommt.

Beispielhafte Ausführungsformen der Erfindung werden im Folgenden unter Bezugnahme auf die beigefügten Zeichnungen näher erläutert. Es zeigen
- Figur 1: ein Spritzgusswerkzeug mit einem Auswerfer nach dem Stand der Technik und einem Formeinsatz aus Kunststoff bei Raumtemperatur,
- Figur 2: das in Figur 1 gezeigte Spritzgusswerkzeug bei einer typischerweise während des Spritzgusses auftretenden Temperatur,
- Figur 3: eine Schnittdarstellung durch ein erstes Ausführungsbeispiel des erfindungsgemäßen Spritzgusswerkzeug mit einem Formeinsatz aus Kunststoff und einem vorschlagsgemäßen Auswerfer bei Raumtemperatur,
- Figur 4: das in Figur 3 gezeigte Spritzgusswerkzeug bei einer typischerweise während des Spritzgussverfahrens auftretenden Temperatur,
- Figur 5A: eine perspektivische Ansicht eines zweiten Ausführungsbeispiels eines Spritzgusswerkzeugs mit einem ersten Formeinsatz,
- Figur 5B: eine Schnittdarstellung durch das in Figur 5A dargestellte zweite Ausführungsbeispiel des Spritzgusswerkzeugs,
- Figur 6A: eine perspektivische Ansicht des zweiten Ausführungsbeispiels eines Spritzgusswerkzeugs mit einem zweiten Formeinsatz,
- Figur 6B: eine Schnittdarstellung durch das in Figur 6A dargestellte zweite Ausführungsbeispiel des Spritzgusswerkzeugs,
- Figur 7: eine perspektivische Darstellung eines Formrahmens, welcher mit einem der zuvor gezeigten Ausführungsbeispiele des Spritzgusswerkzeugs verwendet werden kann, und
- Figur 8: eine Draufsicht auf ein drittes Ausführungsbeispiel des Spritzgusswerkzeugs ohne Formeinsatz.

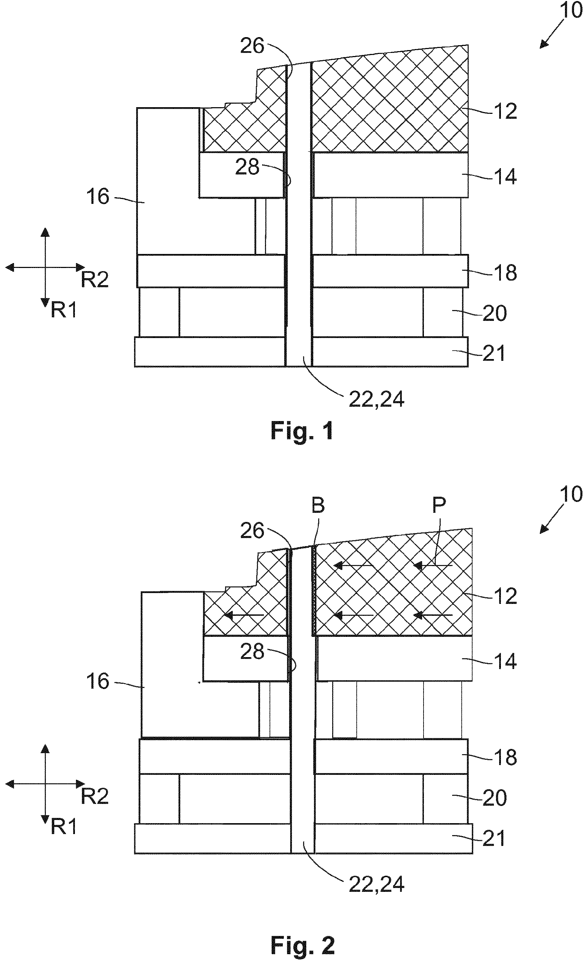

In den Figuren 1 und 2 ist ein Spritzgusswerkzeug 10 nach dem Stand der Technik gezeigt, welches einen Formeinsatz 12 aus Kunststoff aufweist. Der Formeinsatz 12 ist auf einer Adapterplatte 14 angeordnet, die wiederum in einem Halterahmen 16 eingelegt ist. Der Halterahmen 16 ist auf einer Auswerferplatte 18 gelagert, die wiederum über eine Anzahl von Stützen 20 mit einer Grundplatte 21 verbunden ist. Das Spritzgusswerkzeug 10 weist einen Auswerfer 22 auf, der im Wesentlichen ein stangenförmiges Element 24 umfasst, welches mit einer nicht dargestellten Antriebseinrichtung entlang einer ersten Richtung R1 bewegbar ist. Der Formeinsatz 12 weist eine Durchgangsbohrung 26 auf, welche vom Auswerfer 22 durchlaufen wird. Der Auswerfer 22 durchläuft zudem eine Führungsbohrung 28 der Adapterplatte 14. Der Formeinsatz 12 bildet mit dem nicht dargestellten Gegenstück die Geometrie des ebenfalls nicht dargestellten Spritzgussteils.

Beim Herstellen des Spritzgussteils wird ein flüssiger Kunststoff bei vergleichsweise hoher Temperatur und mit vergleichsweise hohem Druck in die Kavität eingespritzt, wodurch sich das gesamte Spritzgusswerkzeug 10 erwärmt. Das Spritzgusswerkzeug 10 kann auch selbst eine Temperiereinheit aufweisen, mit der die verschiedenen Komponenten und insbesondere die Formeneinsätze gezielt erwärmt und abgekühlt werden können. In Figur 2 ist das Spritzgusswerkzeug 10 bei den Temperaturen gezeigt, die üblicherweise beim Herstellen eines Spritzgussteils auftreten, während in Figur 1 das Spritzgusswerkzeug 10 bei Raumtemperatur dargestellt ist. Aufgrund der Tatsache, dass der Formeinsatz 12 aus Kunststoff gefertigt ist, während die übrigen Komponenten, hier der Halterahmen 16, die Adapterplatte 14, die Auswerferplatte 18, die Stütze und die Grundplatte 21, üblicherweise aus Stahl gefertigt sind, treten innerhalb des Spritzgusswerkzeug 10 unterschiedliche Wärmeausdehnungen auf, wobei sich der aus Kunststoff bestehende Formeinsatz 12 stärker ausdehnt als die übrigen Komponenten des Spritzgusswerkzeugs 10. Infolge dieser Wärmeausdehnung des Formeinsatzes 12 drückt dieser in einem Bereich B, der in Figur 2 dargestellt ist, auf den Auswerfer 22. Hierdurch wird eine Kraft auf den Auswerfer 22 ausgeübt, welche in eine zweite Richtung R2 wirkt, die senkrecht zur ersten Richtung R1 verläuft. Die Kraft ist in Figur 2 mit den Pfeilen P gekennzeichnet.

Aufgrund der vom Formeinsatz 12 auf den Auswerfer 22 ausgeübten Kraft wird ein Biegemoment in den Auswerfer 22 eingebracht, wodurch dieser innerhalb des Spritzgusswerkzeugs 10 verklemmen kann. Zudem entsteht im Bereich B eine erhöhte Reibung, wenn der Auswerfer 22 entlang der ersten Richtung R1 bewegt werden soll. Folglich ist die Energie, die zum Bewegen des Auswerfers 22 entlang der ersten Richtung R1 aufgebracht werden muss, bei erhöhter Temperatur höher als bei Raumtemperatur. Weiterhin bewirkt die erhöhte Reibung einen erhöhten Verschleiß sowohl am Formeinsatz 12 als auch am Auswerfer 22.

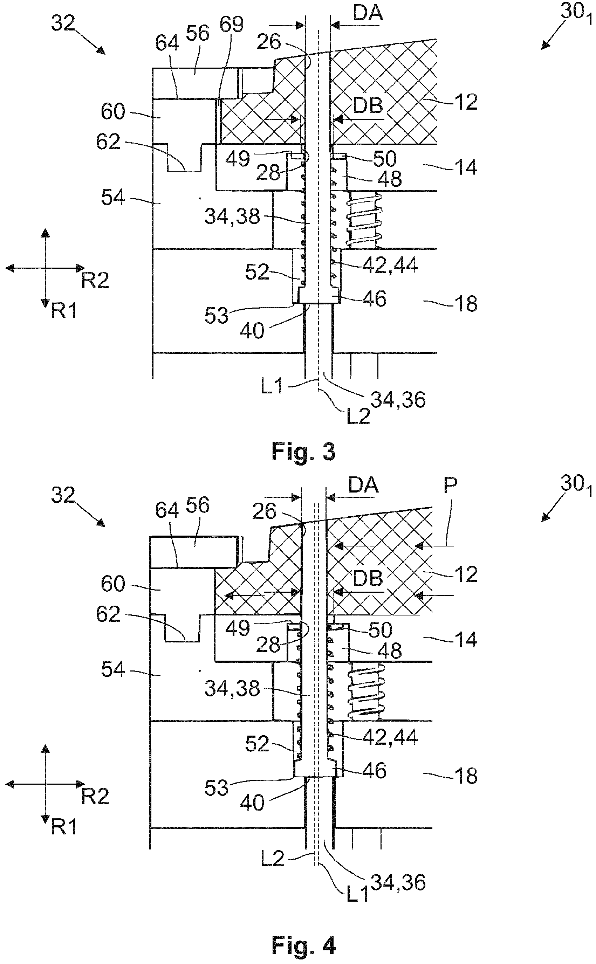

In Figur 3 ist ein erstes Ausführungsbeispiel eines erfindungsgemäßen Spritzgusswerkzeugs 30₁ bei Raumtemperatur und in Figur 4 bei einer erhöhten Temperatur dargestellt, die üblicherweise während des Herstellungsprozesses eines Spritzgussteils auftritt. Der grundsätzliche Aufbau des Spritzgusswerkzeugs 30₁ gemäß dem ersten Ausführungsbeispiel gleicht demjenigen aus dem Stand der Technik, welches in den Figuren 1 und 2 dargestellt worden ist. Insbesondere weist das Spritzgusswerkzeug 30₁ den Formeinsatz 12 aus Kunststoff auf.

Im Unterschied zu dem Spritzgusswerkzeug 10 aus dem Stand der Technik ist der Formeinsatz 12 mittels einer Wechseleinrichtung 32 am übrigen Spritzgusswerkzeug 30₁ befestigt, auf welche später noch genauer eingegangen wird. Zudem weist das Spritzgusswerkzeug 30₁ nach dem ersten Ausführungsbeispiel einen Auswerfer 34 auf, welcher einen ersten Abschnitt 36 und einen zweiten Abschnitt 38 umfasst, die an einer Trennstelle 40 miteinander zusammenwirken. Im dargestellten Ausführungsbeispiel stoßen die beiden Abschnitte 36, 38 an der Trennstelle 40 aneinander an. An der Trennstelle 40 können sich der erste Abschnitt 36 und der zweite Abschnitt 38 relativ zueinander in die zweite Richtung R2 bewegen, welche senkrecht zur ersten Richtung R1 verläuft. Der zweite Abschnitt 38 ist schwimmend gegenüber dem ersten Abschnitt 36 gelagert. Insbesondere der zweite Abschnitt 38 kann aus Keramik, Metall oder Kunststoff gefertigt sein, wobei sich ein verschleißfester und gleitoptimierter Kunststoff anbietet. Die Fertigung aus Kunststoff hat zudem den Vorteil, dass die Wärmeausdehnung in Bezug auf den Formeinsatz 12 ähnlich ist und Spannungsrisse reduziert werden können.

Zudem umfasst das Spritzgusswerkzeug 30₁ ein Vorspannmittel 42, welches im dargestellten Ausführungsbeispiel als eine Feder 44 ausgeführt ist, welche den zweiten Abschnitt 38 umschließt. Im Bereich B der Trennstelle 40 (siehe Figur 2) weist der zweite Abschnitt 38 eine Erweiterung 46 auf, an welcher die Feder 44 mit einem ersten Ende anliegt. In der Adapterplatte 14 ist eine Ausnehmung 48 vorgesehen, welche in etwa konzentrisch zur Durchgangsbohrung 26 des Formeinsatzes 12 und zur Führungsbohrung 28 der Adapterplatte 14 verläuft. Die Ausnehmung 48 bildet einen Ausnehmungsgrund 49, gegen den ein Gleitkörper 50, beispielsweise eine Unterlegscheibe oder eine Gleitscheibe, mit dem zweiten Ende der Feder 44 gedrückt wird. Die Feder 44 spannt den zweiten Abschnitt 38 gegen die Trennstelle 40 vor. Die Trennstelle 40 ist in einer Vertiefung 52 der Auswerferplatte 18 angeordnet. Die Vertiefung 52 bildet eine Anlagefläche 53, gegen die der zweite Abschnitt 38 mit seiner Erweiterung 46 im vorgespannten Zustand anschlägt.

Um ein fertiggestelltes Spritzgussteil aus der Kavität auszuwerfen, wird der Auswerfer 34 mit der nicht dargestellten Antriebseinrichtung entlang der ersten Richtung R1 zur Kavität hin, bezogen auf die in den Figuren 3 und 4 gewählte Darstellung nach oben, bewegt. Dabei wird die Feder 44 vorgespannt.

Sobald das Spritzgussteil ausgeworfen ist, wird der Auswerfer 34 in die entgegengesetzte erste Richtung R1 nach unten zurückgezogen. Die Feder 44 führt den zweiten Abschnitt 38 nach, bi dieser wieder an der Anlagefläche 53 anliegt. Insofern ist es nicht notwendig, die Trennstelle 40 so auszugestalten, dass diese Zugkräfte übertragen kann.

Wie bereits zu dem in den Figuren 1 und 2 dargestellten Spritzgusswerkzeug 10 nach dem Stand der Technik erwähnt, treten infolge der erhöhten Wärmeausdehnung des Formeinsatzes 12 auf den Auswerfer 34 wirkende Kräfte auf. Wiederum sind die Kräfte in Figur 4 mit den Pfeilen P kenntlich gemacht. Aufgrund der Tatsache, dass sich der zweite Abschnitt 38 an der Trennstelle 40 gegenüber dem ersten Abschnitt 36 in die zweite Richtung R2 bewegen kann, kann der zweite Abschnitt 38 der Wärmeausdehnung des Formeinsatzes 12 folgen und bewegt sich daher bezogen auf die in den Figuren 3 und 4 gewählte Darstellung nach links. In den Figuren 3 und 4 sind die erste Längsachse L1 des ersten Abschnitts 36 und die zweite Längsachse L2 des zweiten Abschnitts 38 dargestellt. Die Relativbeweglichkeit der beiden Abschnitte 36, 38 wird aus einem Vergleich der Positionen der ersten Längsachse L1 und der zweiten Längsachse L2 in den Figuren 3 und 4 deutlich. Der Gleitkörper 50 verringert die Reibung, welche zwischen dem Vorspannmittel 42 und dem Ausnehmungsgrund 49 wirkt.

Um zu verhindern, dass sich der zweite Abschnitt 38 bei erhöhter Temperatur in der Führungsbohrung 28 verklemmt, ist der Bohrungsdurchmesser DB der Führungsbohrung 28 etwas größer als der Durchmesser DA des zweiten Abschnitts 38, der die Führungsbohrung 28 durchläuft. Auch ist der Durchmesser des Durchgangslochs des Gleitkörpers 50 größer als der Bohrungsdurchmesser DB der Führungsbohrung. Zudem muss gewährleistet sein, dass der Gleitkörper 50 in die Ausnehmung 50 passt und sich etwas in der Ausnehmung bewegen kann.

Aufgrund der vorschlagsgemäßen Ausführung wird die Belastung des Auswerfers 34 im Vergleich zum Auswerfer 22 aus dem Stand der Technik deutlich reduziert. Insbesondere wird die Gefahr des Verklemmens verringert. Zudem ist der Kraftaufwand zum Bewegen des Auswerfers 34 entlang der ersten Richtung R1 aufgrund der geringeren Reibung, die zwischen dem zweiten Abschnitt 38 und im Formeinsatz 12 12₁ wirkt, wie auch der Verschleiß bei erhöhten Temperaturen deutlich geringer.

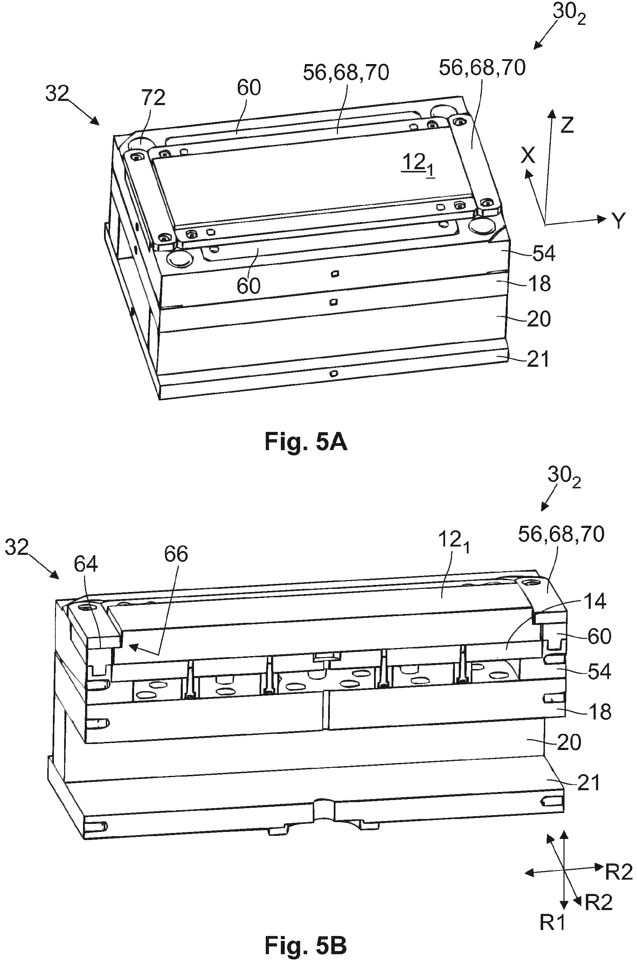

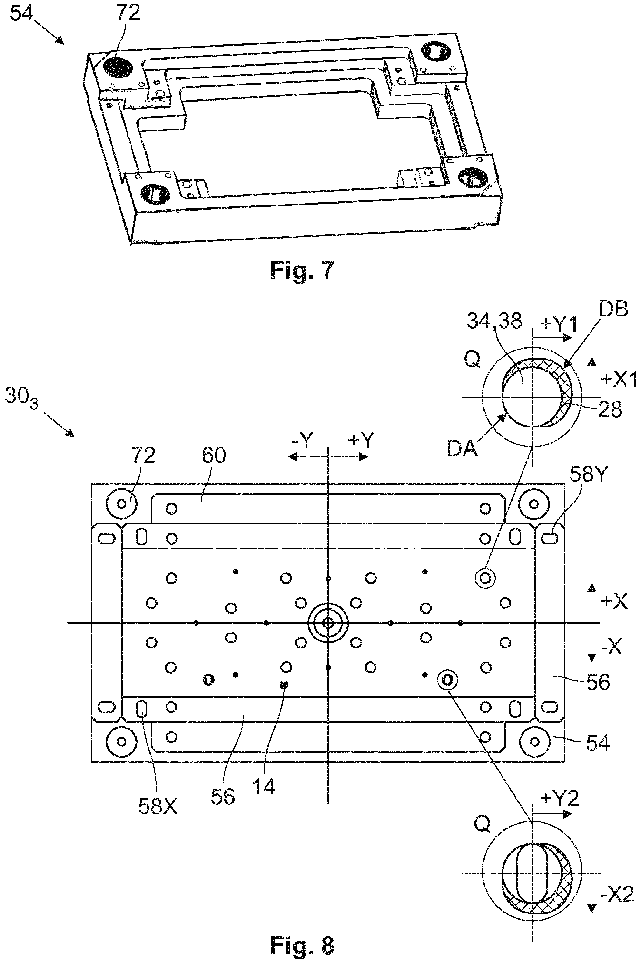

In den Figuren 5A und 5B ist Spritzgusswerkzeug 30₂ anhand einer perspektivischen Darstellung bzw. anhand einer Schnittdarstellung gezeigt. Gut zu erkennen ist ein erster Formeinsatz 12₁, welcher mittels der Wechseleinrichtung 32 am Spritzgusswerkzeug 30₂ befestigt ist. Die Wechseleinrichtung 32 umfasst einen Formrahmen 54, welcher in Figur 7 separat dargestellt ist. Der Formrahmen 54 ist so ausgestaltet, dass die Adapterplatte 14 in den Formrahmen 54 einlegbar ist. Das Spritzgusswerkzeug 30₁ umfasst im dargestellten Ausführungsbeispiel insgesamt vier Klemmleisten 56, welche mit dem Formrahmen 54 verschraubt werden können. Wie insbesondere aus der Figur 8 hervorgeht, weisen die Klemmleisten 56 Langlöcher 58 auf, durch welche die zur Verschraubung verwendeten Schrauben durchgeführt werden können. Weiterhin ist aus den Figuren 5A und 5B zu erkennen, dass das Spritzgusswerkzeug 30₂ insgesamt vier Auflageleisten 60 aufweist, mit denen der Formeinsatz 12₁ innerhalb des Spritzgusswerkzeugs 30₁ positioniert werden kann. Beim in den Figuren 5A bis 6B dargestellten Formrahmen 54 greifen die Auflageleisten 60 in Nuten 62 ein (siehe Figuren 3 und 4). Die Auflageleisten 60 bilden eine freie Oberfläche 64, welche von den Klemmleisten 56 überdeckt wird, wobei die Klemmleisten 56 zum Formeinsatz 12₁ hin über die Auflageleisten 60 überstehen.

Der überstehende Teil der Klemmleisten 56 greift in eine Ausnehmung 66 des Formeinsatzes 12₁ ein, so dass bezogen auf die erste Richtung R1 ein Formschluss entsteht. Folglich bilden die Klemmleisten 56 Formschlussmittel 68, mit welchen der Formeinsatz 12₁ am Spritzgusswerkzeug 30₁, in diesem Fall am Formrahmen 54, befestigt wird. Da jedoch die Klemmleisten 56 nur einen Formschluss entlang der ersten Richtung R1 bewirken, lassen sie eine Bewegung des Formeinsatzes 12₁ in die zweite Richtung R2 zu, solange der Formeinsatz 12₁ nicht an die Auflageleisten 60 anliegt. Entsprechend sind die Auflageleisten 60 und der Formeinsatz 121 so ausgestaltet, dass bei Raumtemperatur ein Spalt 69 vorliegt (vgl. Figur 3). Je nachdem, wie stark die Klemmleisten 56 auf den Formeinsatz 12₁ geschraubt werden, wird ein Reibschluss zwischen dem Formeinsatz 12₁ und den Klemmleisten 56 erzeugt. Die Langlöcher 58 lassen eine Relativbewegung zwischen den Klemmleisten 56 und den Auflageleisten 60 zu, so dass die Klemmleisten 56 der Bewegung des Formeinsatzes 12₁ folgen können. Folglich wirken die Klemmleisten 56 auch als Ausgleichsmittel 70, mit denen die im Vergleich zum übrigen Spritzgusswerkzeug 30₁ erhöhte Wärmeausdehnung des Formeinsatzes 12₁ ausgeglichen werden kann. Der Formeinsatz 12₁ ist quasi schwimmend gelagert.

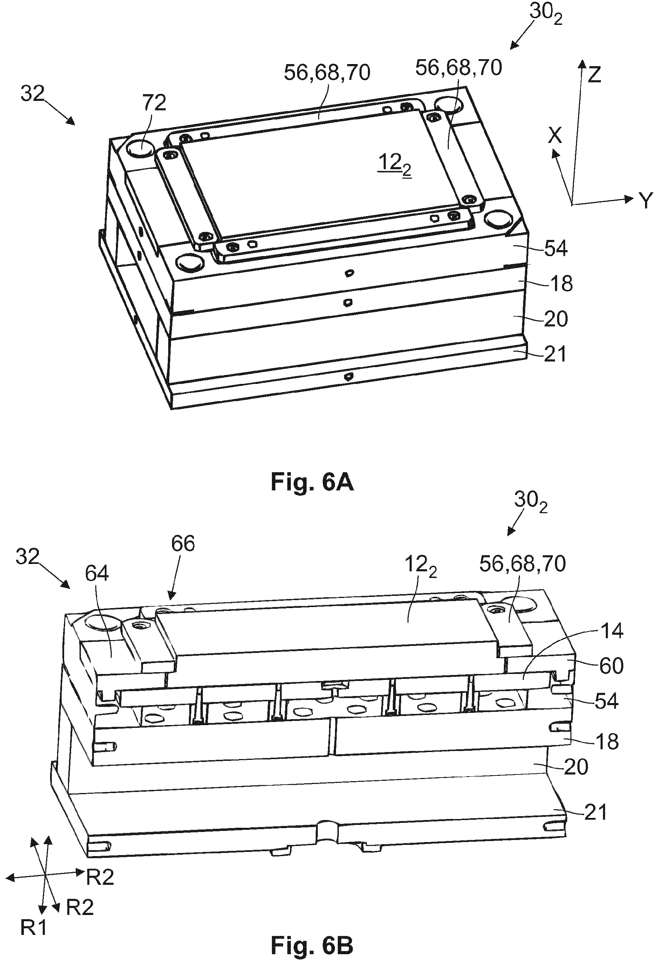

In den Figuren 6A und Figur 6B ist das Spritzgusswerkzeug 30₂ wiederum anhand einer perspektivischen Darstellung bzw. einer Schnittdarstellung gezeigt, allerdings ist ein zweiter Formeinsatz 12₂ mit dem Spritzgusswerkzeug 30₁ verbunden.

Aus einem Vergleich insbesondere der Figuren 5B und 6B geht hervor, dass die in Figur 6B verwendeten Auflageleisten 60 deutlich breiter sind und weiter zum Zentrum des Spritzgusswerkzeugs 30₂ reichen als die in Figur 5B dargestellten Auflageleisten 60. Die Erstreckung des zweiten Formeinsatzes 12₂ in Y-Richtung ist geringer als die des ersten Formeinsatzes 12₁. Es ist folglich möglich, verschieden dimensionierte Formeinsätze 12 mit demselben Spritzgusswerkzeug 30₁ zu verwenden.

In Figur 7 ist der bereits erwähnte Formrahmen 54 anhand einer perspektivischen Darstellung gezeigt. Der Formrahmen 54 wird für jeden Formeinsatz 12 speziell angefertigt, wobei die Befestigungspunkte 72, an denen der Formrahmen 54 mit dem Spritzgusswerkzeug 30₁ befestigt wird, für ein gegebenes Spritzgusswerkzeug 30₁ immer gleich angeordnet und ausgestaltet sind.

Figur 8 zeigt eine Draufsicht auf ein drittes Ausführungsbeispiel des Spritzgusswerkzeugs 30₃, wobei jedoch kein Formeinsatz 12 mit dem Spritzgusswerkzeug 30₃ befestigt ist. Man blickt daher direkt auf die Adapterplatte 14, welche in den Formrahmen 54 eingelegt ist. Aus Figur 8 sind die Langlöcher 58 gut erkennbar, über welche die Klemmleisten 56 mit nicht dargestellten Schrauben am Formrahmen 54 befestigt sind. Die Langlöcher 58 sind so ausgerichtet, dass sie den Bewegungen, welche der Formeinsatz 12 infolge der Erwärmung ausführt, folgen können. Hierzu weisen diejenigen Klemmleisten 56, die entlang der Y-Richtung verlaufen, in X-Richtung ausgerichtete Langlöcher 58X auf, während die Klemmleisten 56, die in X-Richtung verlaufen, in Y-Richtung ausgerichtete Langlöcher 58Y aufweisen.

In Figur 8 sind die Ausschnitte Q vergrößert dargestellt, wodurch gut erkennbar ist, dass der Bohrungsdurchmesser DB der Führungsbohrungen 28 der Adapterplatte 14 größer ist als der Durchmesser DA des zweiten Abschnitts 38 des Auswerfers 34. Damit eine Führung des zweiten Abschnitts 38 des Auswerfers 34 realisiert werden kann, sind die Führungsbohrungen 28 nicht exakt konzentrisch, sondern etwas exzentrisch zu der Längsachse L2 der zweiten Abschnitte 38 des Auswerfers 34 ausgerichtet. Zudem weist die Führungsbohrung 28 keinen exakt kreisförmigen Querschnitt auf, sondern ist in X-Richtung und in Y-Richtung etwas gestreckt. Hierdurch wird einerseits eine Beweglichkeit des zweiten Abschnitts 38 innerhalb der Führungsbohrung 28 und andererseits eine vergleichsweise große Anlagefläche des zweiten Abschnitts 38 an der Führungsbohrung 28 bei Raumtemperatur und bei den während des Herstellungsprozesses auftretenden Temperaturen bereitgestellt, so dass die Führungsbohrung 28 führend auf den zweiten Abschnitt 38 wirken kann.

### Bezugszeichenliste

- 10: Spritzgusswerkzeug nach dem Stand der Technik
- 12: Formeinsatz
- 12₁, 12₂: Formeinsatz
- 14: Adapterplatte
- 16: Halterahmen
- 18: Auswerferplatte

- 20: Stütze
- 21: Grundplatte
- 22: Auswerfer
- 24: stangenförmiges Element
- 26: Durchgangsbohrung
- 28: Führungsbohrung

- 30: Spritzgusswerkzeug
- 30₁, 30₂: Spritzgusswerkzeug
- 32: Wechseleinrichtung
- 34: Auswerfer
- 36: erster Abschnitt
- 38: zweiter Abschnitt

- 40: Trennstelle
- 42: Vorspannmittel
- 44: Feder
- 46: Erweiterung
- 48: Ausnehmung
- 49: Ausnehmungsgrund

- 50: Gleitkörper
- 52: Vertiefung
- 53: Anlagefläche
- 54: Formrahmen
- 56: Klemmleiste
- 58: Langlöcher
- 58X, 58Y: Langlöcher

- 60: Auflageleisten
- 62: Nut
- 64: freie Oberfläche
- 66: Ausnehmung
- 68: Formschlussmittel
- 69: Spalt

- 70: Ausgleichsmittel
- 72: Befestigungspunkte

- B: Bereich
- DB: Durchgangsbohrung
- L1: erste Längsachse
- L2: zweite Längsachse
- P: Pfeil
- Q: Ausschnitt
- R1: erste Richtung
- R2: zweite Richtung

## Patentansprüche

1. Spritzgusswerkzeug (30) zum Herstellen von Spritzgussteilen, umfassend
- eine Grundplatte (21) aus Stahl,
- einen auf der Grundplatte (21) gelagerten Formeinsatz (12), welcher mit einem passenden Gegenstück auf der Düsenseite eine oder mehrere Kavitäten für das oder die herzustellenden Spritzgussteile bildet, wobei der Formeinsatz (12) zumindest eine in die Kavität mündende Durchgangsbohrung (26) aufweist,
- zumindest einen Auswerfer (34) zum Auswerfen des oder der Spritzgussteile aus der Kavität, wobei der Auswerfer (34)
∘ entlang einer ersten Richtung (R1) bewegbar im Spritzgusswerkzeug (30) gelagert ist und zumindest teilweise in die Durchgangsbohrung (26) hineinragt, so dass der Auswerfer (34) in die Kavität einbringbar ist, und
∘ einen ersten Abschnitt (36) und einen zweiten Abschnitt (38) umfasst, die an einer Trennstelle (40) miteinander zusammenwirken und die in der Trennstelle (40) in einer senkrecht zur ersten Richtung (R1) verlaufenden zweiten Richtung (R2) relativ zueinander bewegbar sind und
- die Trennstelle (40) außerhalb des Formeinsatzes (12) angeordnet ist, wobei
- das Spritzgusswerkzeug (30) ein mit dem zweiten Abschnitt (38) zusammenwirkendes Vorspannmittel (42) aufweist, welche den zweiten Abschnitt (38) zur Trennstelle (40) hin vorspannt,
**dadurch gekennzeichnet, dass**
der auf der Grundplatte (21) gelagerte Formeinsatz (12) aus Kunststoff ist und
das Spritzgusswerkzeug (30) eine zwischen der Grundplatte (21) und dem Formeinsatz (12) angeordnete Adapterplatte (14) aus Stahl mit einer Anzahl von Führungsbohrungen (28) zum Führen des Auswerfers (34) umfasst, wobei sich das Vorspannmittel (42) an der Adapterplatte (14) abstützt.

2. Spritzgusswerkzeug (30) nach Anspruch 1,
**dadurch gekennzeichnet, dass** die Adapterplatte (14) eine konzentrisch zur Führungsbohrung angeordnete Ausnehmung (48) mit einem Ausnehmungsgrund (49) aufweist und sich das Vorspannmittel (42) am Ausnehmungsgrund (49) abstützt.

3. Spritzgusswerkzeug (30) nach Anspruch 2,
**dadurch gekennzeichnet, dass** zwischen dem Ausnehmungsgrund (49) und dem Vorspannmittel (42) ein Gleitkörper (50) angeordnet ist.

4. Spritzgusswerkzeug (30) nach einem der vorherigen Ansprüche, **dadurch gekennzeichnet, dass** zwischen der Grundplatte (21) und der Adapterplatte (14) eine Auswerferplatte (18) aus Stahl angeordnet ist und die Trennstelle (40) in der Auswerferplatte (18) angeordnet ist.

5. Spritzgusswerkzeug (30) nach Anspruch 4,
**dadurch gekennzeichnet, dass** die Auswerferplatte (18) eine Vertiefung (52) aufweist, in welcher die Trennstelle (40) angeordnet ist.

6. Spritzgusswerkzeug (30) nach Anspruch 5,
**dadurch gekennzeichnet, dass** die Vertiefung (52) eine Anlagefläche (53) aufweist und das Vorspannmittel (42) den zweiten Abschnitt (38) gegen die Anlagefläche (53) vorspannt.

7. Spritzgusswerkzeug (30) nach einem der vorherigen Ansprüche, **dadurch gekennzeichnet, dass** die Führungsbohrungen (28) der Adapterplatte (14) einen Bohrungsdurchmesser (DB) aufweisen, der größer ist als der Durchmesser (DA) desjenigen Abschnitts, der die Adapterplatte (14) durchläuft.

## Claims

1. Injection molding tool (30) for the production of an injection molded part, comprising
- a base plate (21) made of steel,
- a mold insert (12), mounted on the base plate (21), which, together with a matching counterpart on the nozzle side, forms one or more molds for the injection molded parts intended for production, wherein the mold insert (12) comprises at least one through bore (26) which ends in the mold,
- at least one ejector (34) for ejecting the injection molded part or parts, wherein the ejector (34)
o is moveably mounted in a first direction (R1) in the injection molding tool (30) and extends at least partially into the through bore (26) such, that the ejector (34) can be inserted into the mold, and
o comprises a first section (36) and a second section (38) which interact with each other at a separation point (40) and which are moveable in the separation point (40) in a second direction (R2) which runs vertically to the first direction (R1), and
- the separation point (40) is arranged outside of the mold insert (12), wherein
- the injection molding tool (30) comprises a biasing means (42) which interacts with the second section (38) and which biases the second section (38) towards the separation point (40),
**characterized in that**
the mold insert (12) mounted on the base plate (21) is made of plastic and **in that** the injection molding tool (30) comprises an adapter plate (14), arranged between the base plate (21) and the mold insert (12), which is made of steel and has numerous guide bores (28) for guiding the ejector (34), wherein the biasing means (42) rest against the adapter plate (14).

2. Injection molding tool (30) in accordance with claim 1,
**characterized in that** the adapter plate (14) comprises a recess (48), arranged concentrically to the guide bore and having a recess base (49) and **in that** the biasing means (42) rest against the recess base (49).

3. Injection molding tool (30) in accordance with claim 2,
**characterized in that** a sliding body (50) is arranged between the recess base (49) and the biasing means (42).

4. Injection molding tool (30) in accordance with any of the preceding claims,
**characterized in that** an ejector plate (18) made of steel is arranged between the base plate (21) and the adapter plate (14), and **in that** the separation point (40) is disposed in the ejector plate (18).

5. Injection molding tool (30) in accordance with claim 4,
**characterized in that** the ejector plate (18) comprises an indentation (52) in which the separation point (40) is disposed.

6. Injection molding tool (30) in accordance with claim 5,
**characterized in that** the indentation (52) comprises a support surface (53), and **in that** the biasing means (42) bias the second section (38) against the support surface (53).

7. Injection molding tool (30) in accordance with any of the preceding claims,
**characterized in that** the guide bores (28) of the adapter plate (14) comprise a bore diameter (DB) which is larger than the diameter (DA) of that section that extends through the adapter plate (14).

## Revendications

1. Outil d'injection (30) pour injecter des pièces comprenant:
- une plaque de base (21) en acier,
- un insert de moule monté sur la plaque de base (21), et qui forme avec une contrepièce appropriée sur le côté de la buse une ou de plusieurs cavités pour la ou les pièces à injecter, l'insert de moule (12) ayant au moins un perçage traversant (26) débouchant dans la cavité,
- au moins un éjecteur (34) pour éjecter la ou les pièces injectées de la cavité, l'éjecteur (34) :
* étant mobile selon une première direction (R1) dans l'outil d'injection (30) et pénétrant au moins en partie dans le perçage traversant (26) de façon que l'éjecteur (34) puisse être mis dans la cavité, et
- comprenant un premier segment (36) et un second segment (38) qui coopèrent à un point de jonction (40) et sont mobiles, l'un par rapport à l'autre dans une seconde direction (R2), perpendiculaire à la première diction (R1), au niveau du point de jonction (40), et
- le point de jonction (40) est à l'extérieur de l'insert de moule (12),
- l'outil (30) ayant un moyen de précontrainte (42) coopérant avec le second segment (38), ce moyen assurant la précontrainte du second segment (38) par rapport au point de jonction (40),
outil d'injection **caractérisé en ce que**
- l'insert de moule (12) monté sur la plaque de base (21) est en matière plastique, et
- l'outil d'injection (30) a une plaque d'adaptateur (14) entre la plaque de base (21) et l'insert de moule (12), cette plaque étant en acier avec un ensemble de perçages de guidage (28) pour guider l'éjecteur (34), le moyen de précontrainte (42) soutenant la plaque d'adaptateur (14).

2. Outil d'injection (30) selon la revendication 1,
**caractérisé en ce que**
la plaque d'adaptateur (14) a un évidement (48) concentrique au perçage de guidage avec un fond d'évidement (49) et le moyen de précontrainte (42) s'appuie contre le fond d'évidement (49).

3. Outil d'injection (30) selon la revendication 2,
**caractérisé par**
un organe de glissement (50) entre le fond d'évidement (49) et le moyen de précontrainte (42).

4. Outil d'injection (30) selon l'une des revendications précédentes,
**caractérisé par**
une plaque d'éjecteur (18) en acier entre la plaque de base (21) et la plaque d'adaptateur (14) et le point de jonction (40) est dans la plaque d'éjecteur (18).

5. Outil d'injection (30) selon la revendication 4,
**caractérisé en ce que**
la plaque d'éjecteur (18) a une cavité (52) recevant le point de jonction (40).

6. Outil d'injection (30) selon la revendication 5,
**caractérisé en ce que**
la cavité (52) a une surface d'appui (53) et le moyen de précontrainte (42) précontraint le second segment (38) contre la surface d'appui (53).

7. Outil d'injection (30) selon l'une des revendications précédentes,
**caractérisé en ce que**
les perçages de guidage (28) de la plaque d'adaptateur (14) ont un diamètres (DB) supérieur au diamètre (DA) du segment qui traverse la plaque d'adaptateur (14).
